# EUROPEAN PATENT APPLICATION

(11) **EP 1 700 880 A1**
(43) Date of publication of application: **13.09.2006**
(21) Application number: 05425146.7
(22) Date of filing: 11.03.2005
(51) Int. Cl.: C08J 9/00, C08L 63/02, B32B 5/18, B29C 44/12

(54) **Process for making foam resins**

(71) Applicant: Nuova Connavi S.R.L., 19020 Vezzano Ligure la Spezia (IT)
(72) Inventor: Hvala, Massimo, 56122 Pisa (IT); Pfletschinger, Elmar, 22020 San Fermo della Battaglia (CO) (IT)
(74) Representative: Celestino, Marco

(57) **Abstract**

Process for making foam resins starting from a first composition, which is polymerizable through a radicalic mechanism, contained in a reservoir (1) and by a second polymerizable composition, for example an epoxy resin and an anhydride, which at room temperature is in the liquid state, contained in a reservoir (2). In particular, the first composition contains a catalyst for triggering polymerization in the second composition and the second composition comprises a catalyst for triggering polymerization in the first composition. In particular, the first composition comprises a polyester, a vinylester or an acrylic compound. In particular, the second composition comprises an epoxy resin, for example a mono-glycidyl-ether, a di-glycidyl-ether or a tri-glycidyl-ether and by an anhydride that can be: phthalic anhydride, tetra-hydro-phtalic anhydride, HET anhydride, methyl-nadic anhydride. Through a pressurized duct (11 or 13) a determined amount of a swelling gas is added, for example CO₂ or N₂, in two respective reservoirs (1 or 2), then the compositions and the swelling dissolved gas are sent by means of volumetric pumps (20) to a mixer (3) in which they are mixed and some process parameters are controlled, in particular viscosity. The mixture obtained is then brought to an expansion head (35) in which a controlled expansion is achieved of the mixture that causes a pressure reduction and causes a gas solubility decrease in the liquid that expands in the liquid mass forming bubbles.

## Description

### Field of the invention

The present invention relates to a process for making foam resins, such as foams of polymeric material, in particular to use in different industrial fields as cores of "sandwich" structures with structural duties and/or with heat insulation duties, for example in the automotive field or in the nautical field.

### Description of the prior art

As well known, to make polymeric foams polymeric materials are normally used, such as polyurethane, PVC, polystyrene and other suitable polymers.

Polymeric foams suitable for being used as cores of "sandwich" structures are moulded as stiff boards with a desired thickness; however, owing to their stiffness, they are not suitable for being used as filling material for sandwich structures with single or double curvature. Therefore, in industrial fields such as the automotive or nautical fields, where curvilinear structures are often necessary, for example as coating layers for car or vessel bodies, alternative solutions are required.

Flexible foam boards exist that fit cylindrical curvatures. However, an increased flexibility is detrimental to some mechanical features of primary importance for materials having structural duties. In fact, a higher flexibility of the foams negatively affects their elastic modules and their resistance against compression and cutting.

An attempt to solve the problem of adapting stiff foams to curved structures, in order not to lose the mechanical features that assist their use as materials with structural duties, provides a reduction of the size of the foam boards up for making small parallelepipeds. These parallelepipeds can be then put in succession in curved sandwich structures, then sealing the spaces between them with filling material such as putty or resin. However, the filling material increases further the overall weight of the final structure and limits therefore its possible fields of application. Another drawback is given by the high costs of production for the manual work necessary for assembling the final product.

A further process for making "sandwich" curved structures is described in IT 1277349. It discloses syntactic foams, i.e. composite materials obtained stuffing a matrix of epoxy resin with glass micro-spheres. Syntactic foams have good mechanical features among which a high ratio between modulus of elasticity and density, and also confer stiffness and resistance to the structures where they are applied.

However, the "sandwich" structures made with syntactic foams have in any case a high density, about 500 kg/m³, remarkably higher than that of usual stiff and plane "sandwich" structures, i.e. about between 30 and 200 kg/m³. Therefore, the use of syntactic foams is limited to particular cases where a high density is acceptable.

### Summary of the invention

It is a feature of the present invention to provide a production process for foam resins, in particular set to be used as cores of "sandwich" curved structures, so that the foams have improved mechanical features with respect to flexible foams of prior art.

It is another feature of the present invention to provide such a process that allows to obtain polymeric foam material with low density.

It is another feature of the present invention to provide such a process that is easy to carry out and not expensive.

This and other features are accomplished with one exemplary production process for foam resins comprising the steps of:
- preparing a first composition in the fluid state, which is polymerizable with a first polymerization mechanism;
- preparing a second composition in the fluid state, which is polymerizable with a second polymerization mechanism;
- associating a measured amount of a swelling gas to at least one among the above described first and second compositions;
- mixing the first and second composition, obtaining a mixture;
- partially polymerizing the mixture through the first mechanism for causing a polymerization of only the first composition, obtaining a phase having the rheologic behaviour of a gel (B stage);
- simultaneously inducing the development of a measured amount of gas bubbles swelling in the mass of the mixture, the bubbles being stabilized by the rheology of the mixture obtaining an intermediate formable product;
- modelling the intermediate formable product in order to obtain a desired shape;
- completely polimerizing the mixture through the second mechanism for causing a polymerization of the second composition, whereby the intermediate product turns into a final product.

In particular, the first and the second composition comprise thermosetting polymers.

Advantageously, the first composition contains a catalyst for triggering polymerization in the second composition and the second composition comprises a catalyst for triggering polymerization in the first composition.

Preferably, the concentration of the first composition in the mixture is set between 3 and 50%.

Preferably, the polymerization mechanism of the first composition is of radicalic type. In particular, the concentration of the first composition in the mixture is chosen in order to obtain, after the first polymerization, a status (B stage) where the bubbles of the swelling gas become stable. The mixture is now in the state of gel whose consistency changes responsive to the density of the lattice of the first composition whereas in said lattice the second composition is still in the liquid state.

Advantageously, the second composition can comprise an epoxy resin and an anhydride that at room temperature are in the liquid state.

Advantageously, the step suitable for inducing the development of gas bubbles swelling in the mixture can provide a controlled expansion of the mixture same. The expansion causes a decrease of the pressure and, therefore, owing to the solubility of the gas in the mixture, an expansion of the gas in the form of bubbles.

Alternatively, this inducing step can be done by energetically stirring the mixture thus incorporating the gas and creating an emulsion. The stabilization of the emulsion is due, at first, to the high elongational viscosity of the mixture and, eventually, to the state of gel (B stage) described above.

Preferably, the swelling gas can be selected from the group comprised of: nitrogen, carbon dioxide, propane, butane, chlorofluorocarbon, dry air or combinations thereof.

Preferably, the first composition comprises a compound selected from the group comprised of: a polyester, a vinylester, an acrylic system or combinations thereof.

In particular, for example, a polyester can be synthesized by a reaction of propylene glycol with an unsaturated acid, for example fumaric acid, or an unsaturated anhydride, for example maleic anhydride, and possibly with a saturated acid, for example adipic acid, or a saturated anhydride, for example phthalic anhydride. Then, a polyester is obtained that is solubilized in styrene monomer.

In particular, for example, the vinylester can be synthesized by a reaction of A bisphenol with metacrylic acid and solubilizing the product in styrene monomer.

In particular, for example, the acrylic system can be bisphenol A diacrylate, which can be diluted with a monoacrylate.

Preferably, the second composition consists of a mixture epoxide-anhydride.

In particular, the epoxy resin can be mono-glycidyl-ether or di-glycidyl-ether or tri-glycidyl-ether, for example, bisphenol A di-glycidyl-ether.

Preferably, the anhydride suitable for polymerizing with the epoxy resin of the second composition is selected from the group comprised of: phthalic anhydride, tetra-hydro-phtalic anhydride, HET anhydride (hexachloro-endo-methylene tetra-hydro-phtalic anhydride), methyl-nadic anhydride (methyl endo-methylene tetra-hydro-phtalic anhydride).

Preferably, the amount of swelling gas is set between 1 and 50 parts in volume on the mixture volume.

Preferably, the ratio between final volume of the foam resin and the starting volume of the mixture, i.e. the expansion ratio, is set between 2 to 1 and 50 to 1.

Preferably, the viscosity of the intermediate formable product is set between 100 and 1000 Pa^{*}s, at room temperature.

According to another aspect of the invention, as an application of the above, a structural element with sandwich configuration comprises:
- a first thin sheet with at least one curved portion;
- a second thin sheet with at least one curved portion arranged substantially parallel to the first sheet and at a determined distance from it;
- a core of polymeric material suitable for filling the space between the first and the second sheet, the core being made according to the process above described.

Alternatively, a structural element can comprise a body made up of only the polymeric foam material made with the process above described and having at least one curved portion.

### Brief description of the drawings

Further characteristics and the advantages of the process for making foam resins will be made clearer with the following description of an exemplary embodiment thereof, exemplifying but not limitative, with reference to the attached drawings wherein:
- figure 1 shows diagrammatically a possible plant to carry out the process for making foam resins, according to the invention;
- figure 2 shows diagrammatically a perspective elevational side view of a possible sandwich structure of an element with structural duties made with the process of figure 1.

### Description of a preferred exemplary embodiment

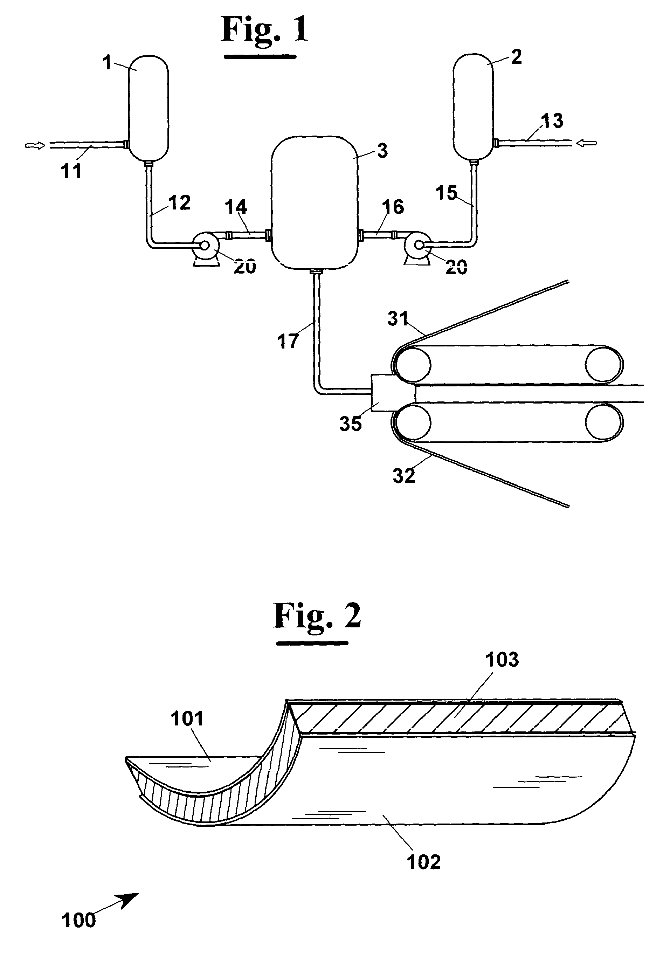

With reference to figure 1, the process for the production of a foam resin, according to the invention, provides the steps of making a first composition, which is polymerizable through a radicalic mechanism, contained in a reservoir 1, and a second polymerizable composition, for example an epoxy resin and an anhydride, which at room temperature is in the liquid state, contained in a reservoir 2. In particular, the first composition contains a catalyst for triggering polymerization in the second composition and the second composition comprises a catalyst for triggering polymerization in the first composition. The first composition comprises a polyester, a vinylester or an acrylic compound, whereas the second composition comprises an epoxy resin and an anhydride. The epoxy part may comprise a mono-glycidyl-ether, a di-glycidyl-ether or a tri-glycidyl-ether. The anhydride may be: phthalic anhydride, tetra-hydro-phtalic anhydride, HET anhydride, methyl-nadic anhydride.

Through a pressurized duct 11 or 13, a determined amount of a swelling gas is added, for example CO₂ or N₂, in reservoirs 1 or 2 respectively. Then, the two compositions and the swelling dissolved gas are sent by means of volumetric pumps 20 to a mixer 3 in which they are mixed controlling some process parameters, in particular viscosity. The mixture obtained is then brought to an expansion head 35 in which a controlled expansion is achieved of the mixture that causes the reduction of the pressure and the decrease of the solubility in the liquid of the gas, which expands in the liquid mass in the form of bubbles. The mixture thus obtained is conveyed by two belts 31 and 32 along which the first polymerization occurs under a radicalic mechanism. More in detail, at the end of the first polymerization, the liquid resin, where the gas bubbles can expand but are not steady, is turned into a gelified phase where the bubbles are steady. The molecular structure of the mixture depends strongly on the concentration of the first composition. A low concentration of the composition that has a radicalic polymerization mechanism causes a structure with insulated macromolecules. On the contrary a high concentration produces a lattice of polymer obtained by means of a radicalic polymerization mechanism in which the second composition is yet in the liquid state.

In this condition the mixture is soft and malleable and it is possible its shaping into a desired form; for example the foam resin 103 is arranged in a mould or it can be arranged between two thin boards 101 and 102 (figure 2) in order to provide a sandwich curved structure 100. To this purpose, the mixture can be brought to a moulding station, not shown in the figure, where it is moulded into a shape having one or more curved portions.

Furthermore, by adjusting the process parameters, in particular the viscosity of the liquid phase and the concentration of the swelling gas, it is possible to bring the density of the foam to suitable values that fit the final use. For example, the density can be adjusted in a predetermined range with minimum values of about 30 kg/m³, whereby it is possible to use the final product both as heat insulator and, for higher densities, for making sandwich boards with structural duties. The process ends when a measured amount of heat is supplied to the mixture in order to activate also the second polymerization mechanism, so that final mechanical features are reached that are comparable to stiff plane structures of prior art.

### EXAMPLES

Two examples are described below that do not limit the possibilities of carrying out in other ways the process within the extent of the invention.

### First example

In a mixer at atmospheric pressure, thermo-stated at about 50°C, bisphenol A diacrylate, imidazole (a catalyst for the epoxy composition) and cobalt octoate (triggering the catalyst of the composition that polymerizes with radicalic mechanism) are continuously added.

In a second mixer bisphenol A di-glycidyl-ether, methyl-nadic anhydride and methyl-ethyl-ketone peroxide (catalyst of the composition that polymerizes with radicalic mechanism) are continuously added. This mixer, thermo-stated at about 20°C, works at a pressure of about 30 bar, by adding carbon dioxide that is controlled modulating the supply of the gas. A stirrer assures a good contact between the liquid phase and the gaseous phase allowing a quick absorption of the gas in the resin.

From the two mixers, through two volumetric pumps, the two compositions join in a third mixer. The pressure in it is at least the same as in the second mixer, so that the gas in solution does not expand. The volume of the third mixer is calculated so that the time of presence in it allows the two compositions to mix and causes the induction of the first polymerization mechanism. The fraction of the first composition in the mixture is about 10% and the temperature of the third mixer is kept about 23°C.

The product continuously flows towards an expansion head kept at about 80°C, where the first polymerization mechanism occurs. An expansion ratio particularly interesting for making sandwich structures is set between 4 to 1 and 6 to 1.

A the outlet the foam resin in the B stage is arranged between two sheets of polyethylene that are aided, for about one metre, by two strips of steel kept at about 50°C in order to complete the first polymerization.

The extruded foam, flexible and modellable at room temperature, can be conserved at -20°C. Vice-versa, a thermosetting for about 8 hours at 80°C causes the second polymerization obtaining a final product with desired mechanical features.

### Second example

In a closed mixer, at a relative pressure less than 0,5 bar, heated at about 50°C and containing dry air, bisphenol A diacrylate and imidazole (the catalyst for the epoxy composition) are added. Then bisphenol A di-glycidyl-ether, methyl-nadic anhydride and methyl-lethyl-ketone peroxide (the catalyst for the radicalic composition) are added, and the temperature is lowered to about 20°C, and the speed of a stirrer is increased so that air remains trapped therein. In these conditions air bubbles form and escape to the surface.

Then, cobalt octoate (triggering the catalyst of the composition that polymerizes with radicalic mechanism) is added and the mixture is continuously stirred. At this point the polymerization of the radicalic composition starts, thus increasing gradually the elongational viscosity of the mixture and stabilizing the incorporated bubbles that cannot escape to the surface any more: the mixture whips like cream.

Once reached a desired expansion, the mixer is pressurized at about 3 bar and the mixture is discharged towards an expansion head at about 80°C in which the first polymerization mechanism occurs bringing the mixture to the B stage. An expansion ratio particularly interesting for making sandwich structures is set between 4 to 1 and 6 to 1.

At the outlet the foam resin in the B stage is arranged between two sheets of polyethylene that are aided, for about one metre, by two webs of steel kept at about 50°C in order to complete the first polymerization.

The extruded foam, flexible and modellable at room temperature, can be conserved at -20°C. Vice-versa, a thermosetting for about 8 hours at 80°C causes the second polymerization obtaining a final product with desired mechanical features.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Process for making a foam resin **characterised in that** it provides the following steps:
- preparing a first composition in the fluid state that is polymerizable with a first polymerization mechanism;
- preparing a second composition in the fluid state that is polymerizable with a second polymerization mechanism;
- associating a measured amount of a swelling gas to at least one of said first and second composition;
- mixing said first and second composition, obtaining a mixture;
- polymerizing said mixture through said first mechanism for causing a polymerization of only said first composition;
- simultaneously inducing the development of a measured amount of bubbles of said swelling gas in the mass of said mixture, said bubbles being stabilized controlling instantly the viscosity of said mixture obtaining an intermediate formable product (foam resin in B stage);
- modelling said intermediate formable product in order to obtain a desired shape;
- polymerizing said mixture through said second mechanism for causing a polymerization of said second composition, whereby said intermediate product turns into a final product (foam resin).

2. Process for making foam resins, according to claim 1, wherein said first and second composition comprise thermosetting polymers.

3. Process for making foam resins, according to claim 1, wherein said first composition contains a catalyst for said reaction of polymerization of said second composition and said second composition comprises a catalyst for said reaction of polymerization of said first composition.

4. Process for making foam resins, according to claim 1, wherein the concentration of said first composition in said mixture is set between 3 and 50% by weight.

5. Process for making foam resins, according to claim 1, wherein said polymerization mechanism of said first composition is of radicalic type.

6. Process for making foam resins, according to claim 1, wherein said second composition comprises an epoxy resin and an anhydride, said second polymerization mechanism being carried out supplying a measured amount of heat to said mixture.

7. Process for making foam resins, according to claim 1, wherein said step suitable for inducing the development of said gas bubbles in said mixture provides a controlled expansion of said mixture, said expansion causing a decrease of the pressure and therefore of the solubility of said gas in said mixture.

8. Process for making foam resins, according to claim 1, wherein said step that causes the development of said gas bubbles provides a mixing step by stirring said mixture with said swelling gas and preparing an emulsion thereof.

9. Process for making foam resins, according to claim 1, wherein said swelling gas is selected from the group comprised of: nitrogen, carbon dioxide, propane, butane, chlorofluorocarbon, dry air.

10. Process for making foam resins, according to claim 1, wherein said first composition comprises a compound selected from the group comprised of: a polyester, a vinylester, an acrylic compound or combinations thereof.

11. Process for making foam resins, according to claim 1, wherein at room temperature said second composition is in the liquid state.

12. Process for making foam resins, according to claim 1, wherein said amount of swelling gas is set between 1 and 50 parts in volume on mixture volume liquid.

13. Process for making foam resins, according to claim 1, wherein the ratio between final volume of the foam resin and the starting volume of the mixture, i.e. the expansion ratio, is set between 2 to 1 and 50 to 1.

14. Structural element with sandwich configuration **characterised in that** it comprises:
- a first thin sheet with at least one curved portion;
- a second thin sheet with at least one curved portion arranged substantially parallel to said first sheet and at a determined distance from it;
- a core of polymeric material suitable for filling the space between said first and said second sheet, said core being made according to the process described in the claims from 1 to 13.

15. Structural element **characterised in that** it provides a body of polymeric foam material made with the process described in the claims from 1 to 13 and having at least one curved portion.
